# FASCICULE DE BREVET EUROPEEN

(11) **EP 2 071 598 B1**
(45) Date de publication et mention de la délivrance du brevet: **22.04.2015**
(21) Numéro de dépôt: 08305878.4
(22) Date de dépôt: 03.12.2008
(51) Int. Cl.: H01G 5/16

(54) **Condensateur à capacité variable comprenant un peigne mobile et un peigne fixe interdigités, accéléromètre et gyromètre comprenant un tel condensateur**
Kondensator mit variabler Leistungskapazität, der eine mobile und eine parallel geschaltete feste Kammerstruktur umfasst und mit diesem Kondensator ausgestattetete Beschleunigungs- und Drehzahlmesser
Variable-capacitor comprising a mobile comb intermeshed with a fixed comb, accelerometer and rate gyro comprising such a capacitor

(30) Priorité: 11.12.2007 FR 0759751
(43) Date de publication de la demande: 17.06.2009
(73) Titulaire: Memscap, 38920 Crolles (FR)
(72) Inventeur: Wenk, Béatrice, 38100 Grenoble (FR)
(74) Mandataire: Palix, Stéphane

(56) Documents cités:
- FR-A- 2 888 394
- US-A- 5 025 346
- US-A1- 2006 077 531
- SCHEIBNER ET AL: "A spectral vibration detection system based on tunable micromechanical resonators" SENSORS AND ACTUATORS A, ELSEVIER SEQUOIA S.A., LAUSANNE, CH, vol. 123-124, 23 septembre 2005 (2005-09-23), pages 63-72, XP005073441 ISSN: 0924-4247
- WENJING YE ET AL: "Optimal Shape Design of an Electrostatic Comb Drive in Microelectromechanical Systems" JOURNAL OF MICROELECTROMECHANICAL SYSTEMS, IEEE SERVICE CENTER, PISCATAWAY, NJ, US, vol. 7, no. 1, 1 mars 1998 (1998-03-01), XP011034786 ISSN: 1057-7157
- BRIAN D JENSEN ET AL: "Shaped Comb Fingers for Tailored Electromechanical Restoring Force" JOURNAL OF MICROELECTROMECHANICAL SYSTEMS, IEEE SERVICE CENTER, PISCATAWAY, NJ, US, vol. 12, no. 3, 1 juin 2003 (2003-06-01), XP011064865 ISSN: 1057-7157

## Description

### DOMAINE DE L'INVENTION

La présente invention a trait au domaine des condensateurs à capacité variable comprenant deux peignes à dents interdigitées, et plus particulièrement au domaine des condensateurs dont l'entrefer varie sous l'effet d'un déplacement des dents du peigne mobile selon une direction perpendiculaire à l'axe principal desdites dents.

L'invention trouve notamment application dans les accéléromètres et les gyromètres miniaturisés.

### ETAT ANTERIEUR DE LA TECHNIQUE

Un condensateur à capacité variable, utilisé dans un accéléromètre ou un gyromètre miniaturisé, comprend un peigne mobile et un peigne fixe. Les dents de ces peignes sont interdigitées et forment entre elles une capacité dont l'entrefer varie en fonction du déplacement du peigne mobile selon une direction perpendiculaire à l'axe principal des dents, ou axe « longitudinal », et dont les surfaces en regard présentent une superficie constante. Un dispositif de mesure et de commande est par ailleurs connecté aux peignes mobile et fixe pour mesurer la capacité que ceux-ci forment entre eux et pour asservir, à l'aide d'une boucle de rétroaction, la position du peigne mobile sur une position centrale.

On observe usuellement que chacune des dents du peigne mobile présente un mode de vibration propre et est capable d'entrer en résonance avec les dents voisines lorsque les dents du peigne mobile sont soumises à un mouvement selon une direction perpendiculaire à leur axe (on parle alors de direction transversale). Lorsque les dents du peigne mobile vibrent ensembles (on parle alors de « mode de résonance transversal» du peigne mobile), le condensateur devient souvent inutilisable en raison du bruit généré par une telle vibration. Par ailleurs l'asservissement de la position du peigne mobile peut devenir instable, et les dents se fragilisent en raison des efforts en flexion importants qu'elles subissent.

Pour pallier de tels inconvénients, les documents FR-A-2 858 853 et FR-A-2 858 854 divulguent des peignes dont les dents, toutes identiques, présentent une section de largeur variable le long de leur axe longitudinal, ainsi qu'un choix particulier de boucle fermée pour l'asservissement de position. Le mode de résonance transversal du peigne mobile est ainsi positionné dans une zone caractérisée par un gain sensiblement nul de la boucle fermée. Par un choix approprié de celle-ci, cette zone est en outre située hors de la gamme de fréquences utiles du condensateur de sorte que l'entrée en résonance des dents du peigne mobile ne perturbe sensiblement pas la mesure de la capacité formée par les peignes.

Toutefois, les dents du peigne mobile étant toujours identiques, le mode de résonance transversal du peigne mobile n'est pas éliminé en tant que tel. Les dents du peigne mobile sont donc encore soumises à des efforts importants de flexion pouvant les fragiliser. De plus, la géométrie proposée par les documents mentionnés précédemment induit des dents plus volumineuses et par conséquent un condensateur de moindre qualité.

### EXPOSE DE L'INVENTION

Le but de la présente demande est de résoudre le problème susmentionné en proposant un condensateur à capacité variable dont le mode de résonance transversal du peigne mobile est atténué, évitant ainsi le bruit, l'instabilité de l'asservissement de position et la fragilisation des dents.

A cet effet, l'invention a pour objet un condensateur à entrefer variable comportant un peigne mobile et un peigne fixe, chacun des peignes comprenant un corps, des dents ayant des extrémités fixées au corps et des extrémités libres, les dents des peignes mobile et fixe étant interdigitées, l'entrefer de la dite capacité étant variable par le déplacement transversal des dents du peigne mobile.

Selon l'invention, les dents du peigne mobile présentent entre elles des différences géométriques de manière à atténuer des modes de résonance transversaux du peigne mobile.

En d'autres termes, on procède à un découplage énergétique des dents du peigne mobile. En effet, les dents vibrent ensemble en raison de l'égalité de leurs fréquences propres de résonance. De fait, lorsque les dents présentent entre elles des différences géométriques, leurs fréquences propres ne sont plus toutes identiques et le mode de résonance du peigne est ainsi atténué.

En outre, on remarque qu'il n'est pas nécessaire de modifier l'asservissement de position pour tenir compte des différences géométriques du peigne mobile. Les lois de commande de l'état de la technique peuvent ainsi être utilisées avec un condensateur selon l'invention.

Suivant des modes de réalisation particuliers de l'invention, le condensateur comprend une ou plusieurs des caractéristiques suivantes.

Les dents du peigne présentent entre elles des différences de longueur, de largeur et/ou de forme.

En d'autres termes, le découplage énergétique des dents est assuré par des différences géométriques dans le plan du peigne. La fabrication du peigne, par attaque chimique par exemple, est ainsi facilitée par l'utilisation d'un masque approprié.

Une fréquence de résonance naturelle d'une dent du peigne mobile diffère de celles de dents voisines d'au moins un pourcent.

En d'autres termes, les inventeurs ont observé qu'une différence d'un pourcent entre les fréquences de résonance propre de dents voisines du peigne mobile a pour effet de sensiblement annuler le mode de résonance de celui-ci.

L'agencement des dents du peigne mobile présente des blocs de dents sensiblement identiques. Notamment, les extrémités libres des dents du peigne mobile forment un agencement linéaire par morceau tels qu'un agencement en sapin ou un agencement en V par exemple.

En d'autres termes, il n'est pas nécessaire que toutes les dents soient différentes. Des groupes de dents identiques peuvent être ainsi envisagés tout en assurant une atténuation ou une annulation efficace du mode de résonance du peigne mobile. La fabrication du condensateur est ainsi facilitée et le peigne mobile est plus compact.

Les extrémités libres des dents du peigne mobile forment un agencement pseudo-aléatoire.

En d'autres termes, en choisissant motif pseudo-aléatoire, on garantit avec une très forte probabilité que toutes les dents du peigne mobile sont différentes de manière à annuler le mode de résonance de celui-ci. En effet, avec des groupes de dent identiques, il peut subsister un couplage énergétique entre des dents éloignées. Le mode de résonance, bien qu'atténué, peut donc encore exister, même, si en pratique, on observe qu'un tel couplage est trop faible pour induire un bruit gênant pour les applications visées.

Les dents du peigne fixe sont sensiblement identiques aux dents du peigne mobile.

Ainsi, en choisissant un peigne fixe sensiblement identique au peigne mobile, le condensateur est plus compact.

L'invention a également pour objets un accéléromètre et un gyromètre comportant un condensateur du type susmentionné.

### BREVE DESCRIPTION DES FIGURES

L'invention sera mieux comprise à la lecture de la description qui va suivre, donnée uniquement à titre d'exemple, et faite en relation avec les dessins annexés, dans lesquels des références identiques désignent des éléments identiques ou analogues, et dans lesquels :
- la figure 1 est une vue schématique d'un premier condensateur de l'état de la technique ;
- la figure 2 est un tracé illustrant un mode de résonance du condensateur de la figure 1 ;
- la figure 3 est un premier mode de réalisation d'un condensateur selon l'invention ;
- la figure 4 est un tracé illustrant l'absence de mode de résonance du condensateur de la figure 3 ;
- la figure 5 est un second mode de réalisation d'un condensateur selon l'invention ;
- la figure 6 est un tracé illustrant l'absence de mode de résonance du condensateur de la figure 5 ;
- la figure 7 est un troisième mode de réalisation d'un condensateur selon l'invention ;
- la figure 8 est un tracé illustrant l'absence de mode de résonance du condensateur de la figure 7 ; et
- la figure 9 est une vue schématique d'un second condensateur de l'état de la technique auquel s'applique l'invention.

### DESCRIPTION DETAILLEE DE L'INVENTION

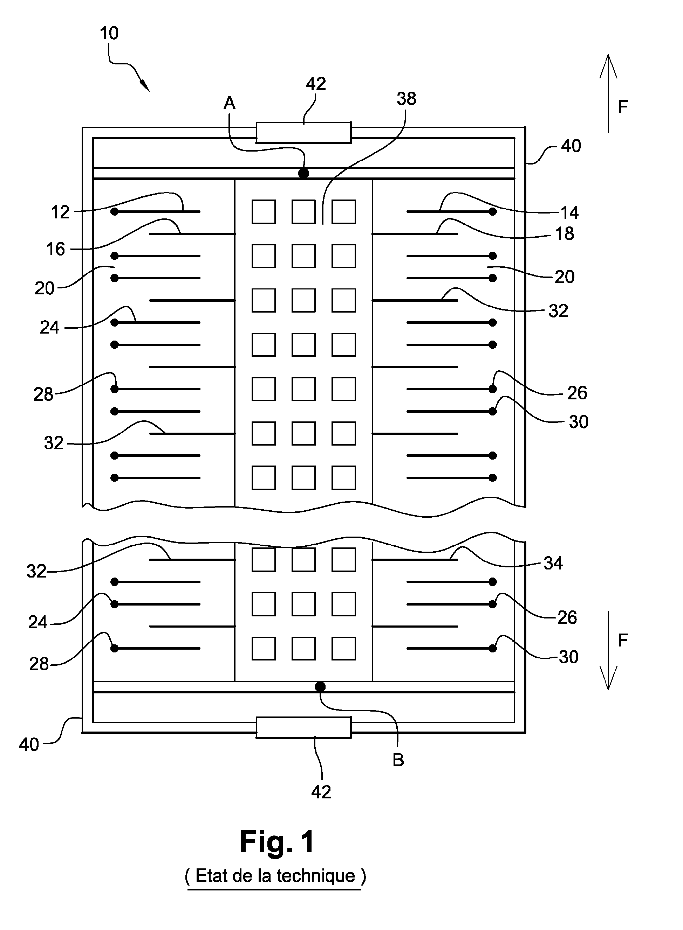

Sur la figure 1, il est illustré, sous la référence générale 10, un condensateur de l'état de la technique à entrefer variable et dont les surfaces en regard sont de superficie constante, tel que décrit dans le document FR-A-2 700 012.

Le condensateur 10, ici utilisé dans un accéléromètre, comprend deux peignes fixes 12, 14, ainsi que deux peignes mobiles 16, 18, un peigne mobile étant interdigité avec un peigne fixe.

Les peignes fixes 12, 14 comprennent un corps unique 20, par exemple formé d'une couche de substrat en silicium, et des dents 24, 26, dont des extrémités sont fixées au corps 20 au moyen de points d'ancrage 28, 30.

Chaque peigne mobile 16, 18 comprend quant à lui des dents 32, 34 dont des extrémités sont fixées à une masse mobile unique 38. La masse mobile 38 est fixée à un cadre déformable 40, lui même fixé au corps 22 par des points d'ancrage 42. Les portions du cadre 40 parallèles aux dents assurent par ailleurs une fonction de ressort.

Sous l'effet d'une accélération dans la direction des flèches F, c'est-à-dire selon une direction sensiblement perpendiculaire à l'axe des dents 32, 34, ou déplacement « transversal », la masse mobile 38 est animée d'un mouvement dans cette même direction. L'écart entre les dents des peignes mobiles et les dents des peignes fixes, et donc l'entrefer et par conséquent la capacité formée entre des peignes mobile et fixe interdigités, varie ainsi en fonction de l'accélération subie. On notera que les surfaces en regard des dents 32, 34 du peigne mobile restent identiques pendant le déplacement transversal de celles-ci.

Pour plus de détail sur l'agencement et le fonctionnement de cet accéléromètre, on se référera au document susmentionné.

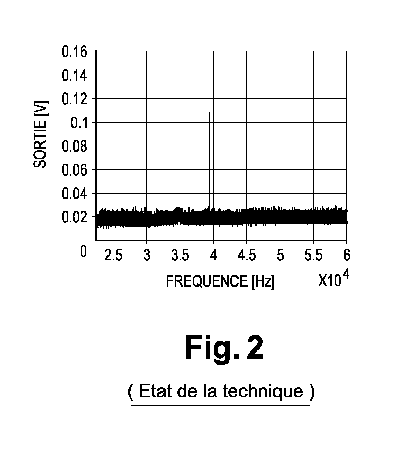

Dans l'exemple de l'état de la technique venant d'être illustré, les dents 32, 34 des peignes mobiles 16, 18 sont sensiblement identiques. On observe ainsi un mode de résonance transversal de chaque peigne mobile 16, 18. Par exemple, dans le cas d'un peigne mobile formé de dents d'une longueur de 500 micromètres, un mode de résonance transversal est présent à environ 40 kHz, comme cela est illustré à la figure 2. Pour mesurer un tel mode de résonance transversal, il est appliqué une tension sinusoïdale aux extrémités du peigne mobile, par exemple à des bornes A et B de la masse mobile 38, en faisant varier la fréquence de celle-ci d'un pas prédéterminé.

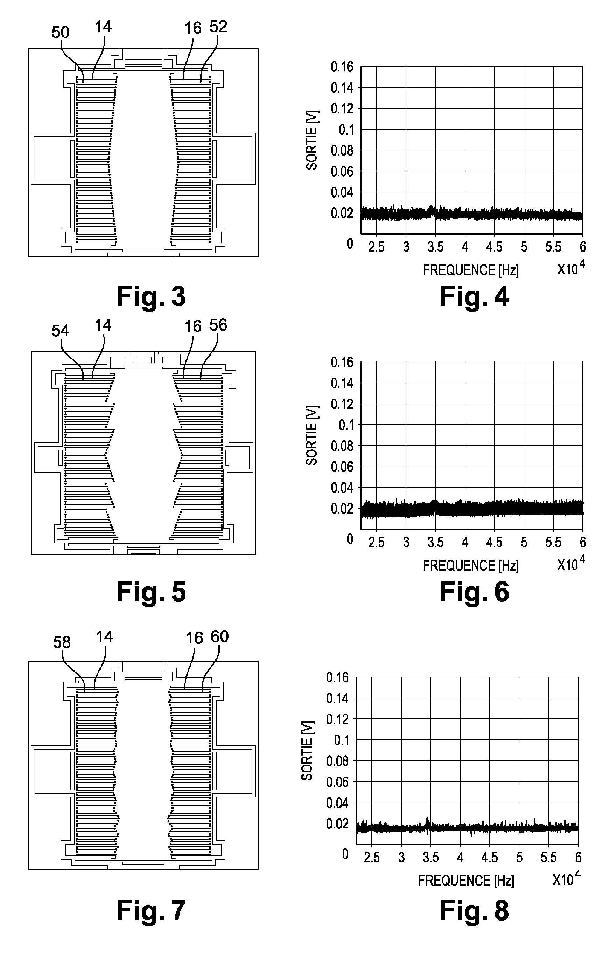

Sur la figure 3, un premier mode de réalisation d'un condensateur selon l'invention est illustré. Ce mode de réalisation est identique à celui de la figure 1 à la seule différence que les longueurs des dents 50, 52 des peignes mobiles 16, 18 diffèrent d'une dent voisine à l'autre. Plus particulièrement, les extrémités libres des dents 50, 52 de chaque peigne mobile 16, 18 forment un agencement en V, la longueur d'une dent variant d'au moins 3 micromètres par rapport à la longueur de dents voisines. Comme cela est illustré à la figure 4, le mode de résonance transversal des peignes mobiles 14, 16 a sensiblement disparu.

Sur la figure 5, un deuxième mode de réalisation est illustré dans lequel les extrémités libres des dents 54, 56 de chaque peigne mobile 14, 16 forment un agencement en sapin, la longueur d'une dent variant d'au moins 3 micromètres par rapport à la longueur de dents voisines. La encore, comme cela est illustré à la figure 6, le mode de résonance transversal des peignes mobiles 14, 16 a sensiblement disparu.

Sur la figure 7, un troisième mode de réalisation est illustré dans lequel la longueur des dents 58, 60 de chaque peigne mobile 14, 16 varie de manière pseudo-aléatoire dans la gamme de 449 micromètres à 551 micromètres avec une différence d'au moins 3 micromètres entre deux dents voisines. La encore, comme cela est illustré à la figure 8, le mode de résonnance transversal des peignes mobiles 14 et 16 a sensiblement disparu.

D'une manière générale, les inventeurs ont observé qu'une différence géométrique, comme une différence de longueur, de largeur ou de forme, entre des dents voisines d'un peigne mobile, correspondant à une différence d'au moins 1 pourcent de leur fréquence de vibration propre, annule sensiblement le mode de résonance transversal du peigne mobile.

On comprendra évidemment qu'il existe une multitude de modes de réalisation possibles de l'invention. En fonction des contraintes technologiques de fabrication par exemple, il peut être préféré l'une ou l'autre des différences géométriques. Pour concevoir un peigne selon l'invention, une démarche d'essais et erreurs peut être appliquée. Par exemple, un peigne mobile présentant des différences géométriques parmi ses dents est conçu. Ensuite, pour déterminer si les différences géométriques entre les dents de ce peigne sont suffisantes pour annuler ou atténuer le mode de résonnance transversal, une tension alternative est par exemple appliquée aux bornes du peigne avec une fréquence variable. Si le mode de résonance transversal est toujours présent, il sera ainsi excité. Il s'agira alors de modifier la conception du peigne mobile, par exemple en accentuant l'amplitude des différences géométriques entre ses dents.

Les inventeurs ont également observé qu'il n'est pas nécessaire que les dents d'un peignes mobiles soient toutes différentes les unes des autres. Ainsi par exemple, comme cela est illustré aux figures 3 et 5, le peigne mobile peut présenter des blocs de dents identiques tout en atténuant ou annulant sensiblement le mode de résonance transversal. Prévoir des blocs de dents identiques facilite ainsi la fabrication du peigne.

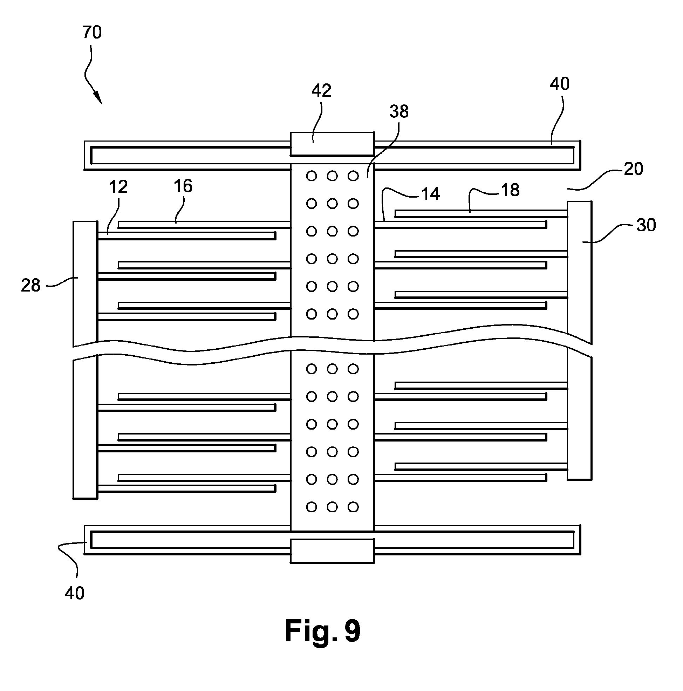

On comprendra également que l'invention s'applique à tout type de condensateur à entrefer variable et dont les surfaces en regard présentent une superficie constante comprenant au moins un peigne mobile et un peigne fixe interdigités. Par exemple, l'invention s'applique à un condensateur 70 tel qu'illustré à la figure 9 dans lequel les peignes mobile et fixe comprennent un même nombre de dents.

L'invention trouve notamment application dans le domaine des accéléromètres et des gyromètres.

## Revendications

1. Condensateur à entrefer variable comportant un peigne mobile (16, 18) et un peigne fixe (12, 14), chacun des peignes comprenant un corps (20, 38), des dents (50, 52 ; 54, 56 ; 58, 60) ayant des extrémités fixées au corps et des extrémités libres, les dents des peignes mobile et fixe étant interdigitées, l'entrefer dudit condensateur étant variable par le déplacement transversal des dents du peigne mobile, ***caractérisé* en ce que** les dents (50, 52 ; 54, 56 ; 58, 60) du peigne mobile (16, 18) présentent entre elles des différences géométriques de manière à atténuer des modes de résonance transversaux du peigne mobile.

2. Condensateur selon la revendication 1, ***caractérisé* en ce que** les dents (50, 52 ; 54, 56 ; 58, 60) du peigne mobile (16, 18) présentent entre elles des différences de longueur, de largeur et/ou de forme.

3. Condensateur selon la revendication 1 ou 2, ***caractérisé* en ce qu'**une fréquence de résonance naturelle d'une dent (50, 52 ; 54, 56 ; 58, 60) du peigne mobile (16, 18) diffère de celles de dents voisines d'au moins un pourcent.

4. Condensateur selon la revendication 1, 2 ou 3, ***caractérisé* en ce que** l'agencement des dents (50, 52 ; 54, 56) du peigne mobile (16, 18) présentent des blocs de dents sensiblement identiques.

5. Condensateur selon la revendication 2, 3 ou 4, ***caractérisé* en ce que** les extrémités libres des dents (50, 52 ; 54, 56) du peigne mobile (16, 18) forment un agencement linéaire par morceau.

6. Condensateur selon la revendication 5, ***caractérisé* en ce que** les extrémités libres des dents (54, 56) du peigne mobile (16, 18) forment un agencement en sapin.

7. Condensateur selon la revendication 5, ***caractérisé* en ce que** les extrémités libres des dents (50, 52) du peigne mobile (16, 18) forment un agencement en V.

8. Condensateur selon la revendication 1, 2 ou 3, ***caractérisé* en ce que** les extrémités libres des dents (58, 60) du peigne mobile (16, 18) forment un agencement pseudo-aléatoire.

9. Condensateur selon l'une quelconque des revendications précédentes, ***caractérisé* en ce que** les dents (24, 26) du peigne fixe (12, 14) sont sensiblement identiques aux dents (32, 34) du peigne mobile (16, 18).

10. Accéléromètre comportant un condensateur conforme à l'une quelconque des revendications précédentes.

11. Gyromètre comportant un condensateur conforme à l'une quelconque des revendications 1 à 9.

## Patentansprüche

1. Kondensator mit variablem Luftspalt, einen beweglichen Kamm (16, 18) und einen feststehenden Kamm (12, 14) umfassend, wobei jeder der Kämme einen Körper (20, 38), Zähne (50, 52; 54, 56; 58, 60) mit am Körper befestigten Enden und freien Enden hat, wobei die Zähne des beweglichen und feststehenden Kamms ineinandergreifen, wobei der Luftspalt des Kondensators durch die Transversalverschiebung der Zähne des beweglichen Kamms variabel ist, **dadurch gekennzeichnet, dass** die Zähne (50, 52; 54, 56; 58, 60) des beweglichen Kamms (16, 18) untereinander geometrische Unterschiede aufweisen, um Transversalresonanzmoden des beweglichen Kamms zu dämpfen.

2. Kondensator nach Anspruch 1, **dadurch gekennzeichnet, dass** die Zähne (50, 52; 54, 56; 58, 60) des beweglichen Kamms (16, 18) untereinander Längen-, Breiten- und/oder Formunterschiede aufweisen.

3. Kondensator nach Anspruch 1 oder 2, **dadurch gekennzeichnet, dass** sich eine natürliche Resonanzfrequenz eines Zahns (50, 52; 54, 56; 58, 60) des beweglichen Kamms (16, 18) von denjenigen der Nachbarzähne um mindestens ein Prozent unterscheidet.

4. Kondensator nach Anspruch 1, 2 oder 3, **dadurch gekennzeichnet, dass** die Anordnung der Zähne (50, 52; 54, 56) des beweglichen Kamms (16, 18) im Wesentlichen identische Zahnblöcke aufweist.

5. Kondensator nach Anspruch 2, 3 oder 4, **dadurch gekennzeichnet, dass** die freien Enden der Zähne (50, 52; 54, 56) des beweglichen Kamms (16, 18) pro Stück eine lineare Anordnung bilden.

6. Kondensator nach Anspruch 5, **dadurch gekennzeichnet, dass** die freien Enden der Zähne (54, 56) des beweglichen Kamms (16, 18) eine tannenbaumartige Anordnung bilden.

7. Kondensator nach Anspruch 5, **dadurch gekennzeichnet, dass** die freien Enden der Zähne (50, 52) des beweglichen Kamms (16, 18) eine V-förmige Anordnung bilden.

8. Kondensator nach Anspruch 1, 2 oder 3, **dadurch gekennzeichnet, dass** die freien Enden der Zähne (58, 60) des beweglichen Kamms (16, 18) ein Pseudozufallsanordnung bilden.

9. Kondensator nach einem der vorhergehenden Ansprüche, **dadurch gekennzeichnet, dass** die Zähne (24, 26) des feststehenden Kamms (12, 14) zu den Zähnen (32, 34) des beweglichen Kamms (16, 18) im Wesentlichen identisch sind.

10. Beschleunigungsmesser mit einem Kondensator nach einem der vorhergehenden Ansprüche.

11. Gyrometer mit einem Kondensator nach einem der Ansprüche 1 bis 9.

## Claims

1. Capacitor with variable air-gap, comprising a mobile comb (16, 18) and a fixed comb (12, 14), each of the combs comprising a body (20, 38), teeth (50, 52; 54, 56; 58, 60) having ends fixed to the body and free ends, the teeth of the mobile and fixed combs being interdigital, the air-gap of said capacitor being adjustable by the transverse movement of the teeth of the mobile comb, ***characterized* in that** the teeth (50, 52; 54, 56; 58, 60) of the mobile comb (16, 18) have geometric differences between one another, in order to attenuate the transverse resonance modes of the mobile comb.

2. The capacitor as claimed in claim 1, ***characterised* in that** the teeth (50, 52; 54, 56; 58, 60) of the mobile comb (16, 18) have differences in length, width and/or shape between one another.

3. The capacitor as claimed in either of Claims 1 and 2, ***characterized* in that** a natural resonance frequency of a tooth (50, 52; 54, 56; 58, 60) of the mobile comb (16, 18) differs from those of the neighboring teeth by at least one percent.

4. The capacitor as claimed in claim 1, 2 or 3, ***characterized* in that** the layout of the teeth (50, 52; 54, 56) of the mobile comb (16, 18) has blocks of substantially identical teeth.

5. The capacitor as claimed in claim 2, 3 or 4, ***characterized* in that** the free ends of the teeth (50, 52; 54, 56) of the mobile comb (16, 18) form a linear layout in pieces.

6. The capacitor as claimed in claim 5, ***characterized* in that** the free ends of the teeth (54, 56) of the mobile comb (16, 18) form a herringbone layout.

7. The capacitor as claimed in claim 5, ***characterized* in that** the free ends of the teeth (50, 52) of the mobile comb (16, 18) form a V layout.

8. The capacitor as claimed in claim 1, 2 or 3, ***characterized* in that** the free ends of the teeth (58, 60) of the mobile comb (16, 18) form a pseudo-random layout.

9. The capacitor as claimed in any one of the preceding claims, ***characterized* in that** the teeth (24, 26) of the fixed comb (12, 14) are substantially identical to the teeth (32, 34) of the mobile comb (16, 18).

10. An accelerometer comprising a capacitor as claimed in any one of the preceding claims.

11. A gyro meter comprising a capacitor as claimed in any one of claims 1 to 9.
